# EUROPÄISCHE PATENTSCHRIFT

(11) **EP 1 600 485 B1**
(45) Veröffentlichungstag und Bekanntmachung des Hinweises auf die Patenterteilung: **30.12.2009**
(21) Anmeldenummer: 05010439.7
(22) Anmeldetag: 13.05.2005
(51) Int. Cl.: C09J 175/04, C08G 18/70, C08G 18/79, C08G 18/50, C08G 18/80, C08G 18/18, C08G 18/16

(54) **Klebstoffe**
Adhesives
Adhésifs

(30) Priorität: 28.05.2004 DE 102004026118
(43) Veröffentlichungstag der Anmeldung: 30.11.2005
(73) Patentinhaber: Bayer MaterialScience AG, 51368 Leverkusen (DE)
(72) Erfinder: Ganster, Otto, Dr., 51519 Odenthal (DE); Büchner, Jörg, 51467 Bergisch Gladbach (DE); Lucas, Heinz-Werner, Dr., 51467 Bergisch Gladbach (DE); Henning, Wolfgang, Dr., 51515 Kürten (DE)

(56) Entgegenhaltungen:
- EP-A- 0 467 168
- EP-A- 0 922 720
- DE-A1- 10 140 206

## Beschreibung

Gegenstand der Erfindung sind wässrige Zubereitungen isocyanatreaktiver Polymerdispersionen mit feinteilig dispergierten oberflächendesaktivierten oligomeren Feststoff-Isocyanaten und bestimmten Katalysatoren. Ebenfalls Gegenstand der Erfindung ist die Verwendung der Zubereitungen als latentreaktive Bindemittel, für Beschichtungen sowie für Klebstoffe in Form von Schichten, Filmen oder Pulvern sowie Substrate, die mit diesen beschichtet sind.

Wässrige Zubereitungen isocyanatreaktiver Polymerdispersionen mit feinteilig dispergierten oberflächendesaktivierten, Uretdiongruppen enthaltenden oligomeren Feststoff-Isocyanaten sowie deren Verwendung als latentreaktive Bindemittel für Beschichtungen sowie für Klebstoffe sind bekannt.

In EP-A 0 204 970 wird ein Verfahren zur Herstellung stabiler Dispersionen feinteiliger Polyisocyanate durch Behandlung der Polyisocyanate in einer Flüssigkeit mit Stabilisatoren und Einwirkung hoher Scherkräfte oder Mahlung beschrieben. Dazu sind solche Di- und Polyisocyanate geeignet, deren Schmelzpunkt oberhalb 10°C, vorzugsweise oberhalb 40°C liegt. Die für die Erzeugung der retardierenden bzw. oberflächendesaktivierenden Polymerumhüllung, die die Isocyanatteilchen umgibt, eingesetzten Stabilisatoren werden mono- oder polyfunktionelle Aminstabilisatoren mit primären und/oder sekundären Amingruppen eingesetzt. Die beschriebenen Dispersionen werden als Vernetzer verwendet.

Gemäß EP-A 0 467 168 werden wässrige Zubereitungen aus Copolymerdispersionen und feinteiligen oberflächendesaktivierten Polyisocyanat-Feststoffsuspensionen empfohlen. Sie werden als Beschichtungsmittel für gewebte und nichtgewebte Substrate verwendet. Als Desaktivierungsmittel werden solche Verbindungen beschrieben, welche die auf der Oberfläche sitzenden Isocyanatgruppen zu Harnstoff- oder Polyharnstoff-Strukturen umwandeln, wie beispielsweise Wasser oder primäre sowie sekundäre Amine. Die Vernetzung der mit diesen Zubereitungen hergestellten Beschichtungen, auch 1K-latentreaktive Schichten genannt, findet gleichzeitig mit dem Trocknen in der Wärme statt.

In der EP-A 0 922 720 werden Verfahren zur Herstellung und Verwendung lagerstabiler latentreaktiver Schichten oder Pulver aus oberflächendesaktivierten festen Polyisocyanaten und Dispersionspolymeren mit funktionellen Gruppen beschrieben. Dazu werden wässrige Dispersionen verwendet, die ein festes Polyisocyanat, z.B. ZDI-Dimer (über eine Uretdiongruppe dimerisiertes 2,4-Diisocyanatotoluol; Acima AG, Schweiz; TSE Industries, Clearwater, FL, USA), welches an der Oberfläche desaktiviert ist und ein mit Isocyanat reaktives Polymer enthalten. Die bei Raumtemperatur lagerstabilen, latent-reaktiven Schichten oder Pulver werden durch Erwärmung über eine Aktivierungstemperatur zur Vernetzung gebracht. Die Herstellung der Polyisocyanat-Dispersion und die Oberflächendesaktivierung erfolgen nach der EP-A 0 204 970. Zur Steuerung der Oberflächendesaktivierung und der Vernetzungsreaktion können die verwendeten Dispersionen auch Katalysatoren enthalten, vorzugsweise solche, die in der wässerigen Dispersion hydrolysenstabil sind und später die wärmeaktivierte Vernetzungsreaktion beschleunigen. Beispiele sind organische Zinn-, Eisen-, Blei-, Kobalt-, Wismuth-, Antimon-, Zink-Verbindungen. Alkylmercaptidverbindungen des Dibutylzinns werden auf Grund der höheren Hydrolysenstabilität des Katalysators bevorzugt. Auch tertiäre Amine wie Dimethylbenzylamin, Diazabicycloundecen, sowie nichtflüchtige Polyurethanschaumkatalysatoren auf tertiärer Aminbasis können für spezielle Zwecke oder in Kombination mit Metallkatalysatoren verwendet werden.

EP-A 1 013 690 beschreibt wässrige Dispersionen von Isocyanat-reaktiven Polymeren und festen oberflächendesaktivierten Polyisocyanaten, wobei die wasserlöslichen oder in Wasser dispergierten Polymere eine minimale Filmbildungstemperatur von ≤ + 5°C,. eine Glasübergangstemperatur von ≤ -5 °C und einen Speichermodul bei 10 Hertz und +10°C von 10⁷ besitzen. Die Vernetzungsreaktion läuft unter Normalbedingungen - ohne Wärmeaktivierung - nach dem Verdunsten des Wassers spontan ab. Gemäß DE-A 10 140 206 können die für die Deaktivierung verwendeten Mono- oder Polyamine ionische Gruppen, z.B. Carboxylat- oder Sulfonat-Gruppen als Bestandteil der Molekülstruktur aufweisen.

Besonders geeignete latentreaktive Schichten zeichnen sich dadurch aus, dass sie durch kurzzeitiges, weniger als 60 Sekunden andauerndes Erwärmen auf Temperaturen oberhalb von 40°C, bevorzugt auf eine Temperatur von 60°C bis 110°C, erweichen bzw. dekristallisieren und in diesem Zustand mit einem Substrat im Sinne einer Haft- oder Kontaktklebung verbunden werden können. Gleichzeitig wird unter diesen Bedingungen das oberflächendesaktivierte oligomere Feststoff-Isocyanat aktiviert, welches die in der Klebstoffschicht enthaltenen, isocyanat-reaktive Gruppen aufweisenden Polymere vernetzt und diese an das Substrat anbindet, falls auch dieses isocyanat-reaktive Gruppen aufweist. Dieser Vernetzungsvorgang kann spontan oder gegebenenfalls über einen Zeitraum von mehreren Tagen ablaufen.

Nach dem bisherigen Stand der Technik hergestellte, Uretdione von monomeren Isocyanaten als latentreaktive Vernetzer enthaltende Zubereitungen bergen die Gefahr, daß während der Verarbeitung oder auch bei Verwendung der Fertigteile bei erhöhter Temperatur infolge Spaltung der thermisch labilen Uretdionstruktur relevante Mengen der flüchtigen Isocyanat-Monomere freigesetzt werden können. Dieses Risiko besteht vor allem bei der Verarbeitung von Substraten, die naturgemäß thermisch beansprucht werden müssen. Hierzu gehören beispielsweise thermoplastische Kunststoff-Dekorfolien, die unter Erwärmung über ihren Erweichungspunkt hinaus im Tiefziehverfahren auf mit 1K-latentreaktiven Systemen beschichtete profilierte Möbelfronten aufgebracht werden. Auch Automobil-Innenausstattungselemente können sehr hohen Temperaturen ausgesetzt sein, wenn sich das Fahrzeug in der Sonne aufheizt. Die Isocyanat-Monomeren können dann ausgasen und die Luft im Fahrzeug belasten.

Der vorliegenden Erfindung lag daher die Aufgabe zugrunde, Klebstoffsysteme bereitzustellen, mit denen latentreaktive Schichten erzeugt werden können; bei denen es weder während der Fügung der zu verbindenden Substrate noch während dem Gebrauch derselben bei erhöhter Temperatur zu einer Freisetzung von Isocyanatgruppen enthaltenden Monomeren kommt.

Diese Aufgabe kann erfindungsgemäß durch den Einsatz bestimmter Katalysatoren in den oligomere Feststoff-Isocyanate als latenreaktive Vernetzer enthaltenden Zubereitungen gelöst werden. Die beispielsweise in EP-A 0 922 720 als Katalysatoren verwendeten organischen Metall-Verbindungen des Zinn, Blei, Kobalt, Wismuth oder Antimon sind jedoch für den erfindungsgemäßen Einsatz ungeeignet, weil sie bekanntlich den hydrolytischen Abbau der Polymerkette der bevorzugten Dispersionspolymeren auf Basis von Polyesterpolyurethanen beschleunigen und dadurch die technische Verwendung stark beeinträchtigen würden. Die dort ebenfalls zur Beschleunigung der wärmeaktivierten Vernetzungsreaktion vorgeschlagenen tertiären Amine wie Dimethylbenzylamin, Diazabicyclo-undecen oder andere als Polyurethankatalysatoren verwendete tertiäre Amine sind für eine erfindungsgemäße Verwendung ebenfalls ungeeignet, weil sie die TDI-Freisetzung nicht verhindern (s. Tabelle 7, Vergleichsbeispiele 12b-16b).

Gegenstand der vorliegenden Erfindung sind daher wässrige Zubereitungen enthaltend
a) dispergierte Polymere mit isocyanat-reaktiven Gruppen,
b) dispergierte oberflächendesaktivierte oligomere Feststoff-Polyisocyanate
c) sowie mindestens einen Katalysator und der Katalysator oder die Gesamtheit der Katalysatoren die Reaktion der durch thermische Spaltung des oligomeren Polyisocyanate entstehenden monomeren Polyisocyanate stärker beschleunigt als die thermische Spaltung selbst,
dadurch gekennzeichnet, dass als Katalysatoren Verbindungen der Formel X⁺Y⁻ verwendet werden, in welcher unabhängig voneinander
- X: für Alkali- oder Tetraalkylammonium steht und
- Y: Hydroxyl bedeutet oder für Phenolat- oder die Anionen gesättigter oder ungesättigter Carbonsäuren mit 1 - 18 C-Atomen steht.

Die Auswahl eines erfindungsgemäß einsetzbaren Katalysators erfolgt nach folgenden Kriterien: Solange die Zubereitung als wässrige Dispersionsmischung vorliegt, soll der Katalysator-Zusatz keinen Effekt bewirken, also beispielsweise keinen nachteiligen Einfluß auf die Stabilität des im wässrigen Milieu dispergierten desaktivierten Feststoff-Isocyanats haben. Unter diesem Gesichtspunkt sind gut wasserlösliche, in wässriger Lösung dissoziierte Salze besonders gut geeignet, weil sie in dieser Form nicht in der Lage sind, in die dispergierten Feststoff-Isocyanatteilchen einzudiffundieren.

Nach dem Entfernen der Wasserphase durch Trocknen soll der Katalysator aber im Polymerfilm seine Wirkung entfalten, wenn im Verlauf des Klebevorgangs oder bei Verwendung des mit der Zubereitung hergestellten Fertigteils monomeres Isocyanat aus dem deaktivierten Feststoff-Isocyanat durch thermische Spaltung des oligomeren Isocyanats abgespalten wird.

Der Katalysator muß bei eben der Temperatur, die eine Abspaltung von Isocyanat-Monomer verursacht, die Reaktion des entstandenen Isocyanat-Monomer mit in der Matrix vorhandenen, potentiell mit Isocyanaten reaktionsfähigen Gruppen derart beschleunigen, dass es nicht zur Ausgasung von relevanten Mengen des Isocyanat-Monomers kommt. Diese aus dem Polymer oder aus Additiven stammenden Isocyanat-reaktiven Gruppen können OH-Gruppen, NH-Gruppen (aus Amin-, Urethan- oder Harnstoff-Strukturen) oder auch die Uretdion-Stniktur sein.

Gleichzeitig darf jedoch bei dieser Temperatur der Katalysator nicht oder nur in untergeordnetem Maße die Spaltung des oligomeren Feststoffisocyanats beschleunigen, so dass die Neubildung von flüchtigem monomerem Isocyanat in jedem Fall langsamer verläuft als die Beseitigung des entstehenden flüchtigen monomeren Isocyanats durch seine Reaktion mit in der Schicht vorhandenen Isocyanat-reaktiven Gruppen oder durch die gegebenenfalls ebenfalls mögliche Oligomerisierung zur thermisch stabilen Isocyanurat-Struktur. So kann die Freisetzung flüchtigen monomeren Isocyanats weitgehend unterdrückt werden, welche ohne den Einsatz von Katalysatoren infolge der thermischen Labilität der oligomeren Isocyanate bei Hitzeeinwirkung während der Verarbeitung der Zubereitungen oder während der Verwendung damit hergestellter Klebeverbindungen oder Beschichtungen praktisch unvermeidlich ist.

Gegenstand der vorliegenden Erfindung ist auch ein Verfahren zur Herstellung der erfindungsgemäßen Zubereitungen, wobei man wässrige Dispersionen mindestens eines isocyanatreaktiven Polymers mit mindestens einem dispergierten oberflächendesaktivierten oligomeren Feststoff-Polyisocyanat und mindestens einem Katalysator vermischt, welcher die Reaktion der durch thermische Spaltung der oligomeren Polyisocyanate entstehenden monomeren Polyisocyanate stärker beschleunigt als die thermische Spaltung selbst.

Die verwendeten isocyanatreaktiven Polymerdispersionen sind die bekannten wässrigen Dispersionen von Homo- und Co-Polymerisaten olefinisch ungesättigter Monomere und Polyurethandispersionen. Bei den oligomeren Feststoff-Isocyanaten handelt es sich beispielsweise um Dimere aromatischer oder aliphatischer Isocyanate, insbesondere des TDI oder IPDI. Diese können in der Zubereitung durch Mono- oder Polyamine mit primären und/oder sekundären Aminogruppen desaktiviert sein, wie z.B. in EP-A 0 467 168 beschrieben. Die für die Desaktivierung verwendeten Mono- oder Polyamine können auch, wie in DE-A 10 140 206 beschrieben, ionische Gruppen tragen, z.B. Carboxylat- oder insbesondere Sulfonat-Gruppen. Die letzteren Zubereitungen zeichnen sich durch erhöhte Scherstabilität aus und ergeben nach dem Trocknen sehr gleichmäßige und glatte Schichten.

Für die isocyanatreaktiven Polymerdispersionen können auch Polymerisate und Copolymerisate des 2-Chlorbutadiens verwendet werden.

Erfindungsgemäß geeignete Katalysatoren sind beispielsweise basische Trimerisierungskatalysatoren aus der Reihe literaturbekannter Verbindungen (siehe hierzu Methoden der Organischen Chemie, Houben-Weyl, Band E 20, im Kapitel 14 D. Dieterich: Polyisocyanurate, Seite 1739 ff und die dort zitierten weiteren Literaturstellen), die nach den vorstehenden Kriterien, ggf. durch einfache Vorversuche am konkreten 1K-Latentreaktivsystem ausgewählt werden.

Erfindungsgemäß können beispielsweise Salze der Formel X⁺Y⁻ verwendet werden, in welcher unabhängig voneinander
- X: für Lithium, Natrium oder Kalium oder Tetraalkylammonium der Formel (NR¹R²R³R⁴)⁺, worin R¹ bis R⁴ unabhängig voneinander gesättigte oder ungesättigte Alkylreste mit 1-18 C-Atomen bedeuten, steht und
- Y: Hydroxyl bedeutet oder für Phenolat- oder die Anionen gesättigter oder ungesättigter Carbonsäuren mit 1 - 18 C-Atomen steht
eingesetzt werden. Mit diesen Katalysatoren ergeben die erfindungsgemäßen Zubereitungen Filme oder Beschichtungen, aus denen auch beim Erhitzen auf 90 bis 100°C praktisch kein oder nur sehr geringe Mengen des monomeren Isocyanats als Spaltprodukt des verwendeten oligomeren Polyisocyanats mehr austritt.

Dagegen Amidine oder Mannichbasen, Beispiele für tertiäre Amine als Trimerisierungskatalysatoren (siehe hierzu Methoden der Organischen Chemie, Houben-Weyl, Band E 20, im Kapitel I4 D. Dieterich: Polyisocyanurate, Seite 1739 ff), erfindungsgemäß praktisch wirkungslos.

Die weitgehend quantitative Unterdrückung des Austretens des monomeren Isocyanats aus der (Klebstoff)-Schicht ist im Hinblick auf eine sichere Verwendbarkeit und Verarbeitung solcher Zubereitungen eminent wichtig. Durch die erfindungsgemäße Verwendung von Katalysatoren in diesen Zubereitungen wird dieses Problem gelöst.

Erfindungsgemäß sehr wirksame Katalysatoren sind Alkali-Carboxylate, Alkali-Phenolate oder basische quaternäre Ammoniumverbindungen. Die erfindungsgemäßen Zubereitungen enthalten außer den übrigen Bestandteilen diese Katalysatoren in Konzentrationen von 0,05 - 1,5 Gew.-%, bevorzugt im Bereich 0,1 - 0,7 Gew.-%, und besonders bevorzugt im Bereich 0,2 - 0,5 Gew.-% bezogen auf die gesamte Klebstoffzubereitung. Sie bewirken im Polymerfilm, z.B. der Klebschicht, eine rasche Umsetzung von entstandem monomerem Isocyanat mit Isocyanat-reaktiven Gruppen wie beispielsweise OH- , -NH-, -SH -Gruppen, mit anderen Isocyanatgruppen oder mit Uretdionen unter Bildung von Derivaten wie Urethanen, Allophanaten, Biureten, Isocyanuraten und dergleichen. Jedenfalls sind solche Katalysatoren erfindungsgemäß einsetzbar, die die Umsetzung der freigesetzten Isocyanat-Monomere wie vorstehend beschrieben stärker katalysieren als durch die Spaltung der oligomeren FeststoffIsocyanate weiteres monomeres Isocyanat freigesetzt wird. Dadurch wird bei den im Verlauf der Verarbeitung und/oder Verwendung auftretenden Temperaturen insgesamt freies, Isocyanat-Gruppen aufweisendes Monomer, beispielsweise TDI, in der Schicht schneller umgesetzt wird als es durch Spaltung der Uretdiongruppe im TDI-Dimer, in der Schicht entsteht.

Erfindungsgemäß geeignete Katalysatoren sind zum Beispiel Alkali-Carboxylate, Alkali-Phenolate, oder basische quaternäre Ammoniumverbindungen. Bevorzugt sind basische Salze der Formel

X⁺Y⁻

worin
- X⁺: Alkali-, z.B. Litium-, Natrium-, Kalium-, oder Tetraalkylammonium-Kation (NR¹R²R³R⁴)⁺ und
- Y⁻: OH-, Phenolat-oder Carboxylat-Anion
bedeutet.

Bevorzugt steht X⁺ für Li⁺, Na⁺, K⁺, sowie in (NR¹R²R³R⁴)⁺ sind R¹ bis R⁴ unabhängig voneinander bevorzugt aliphatische, ggf. Substituenten tragende gesättigte oder ungesättigte Alkylreste mit 1 bis 18 C-Atomen (z.B. Methyl-, Ethyl-, 2-Hydroxyethyl, Propyl, 2-Hydroxypropyl, Butyl, Nonyl, Dodecyl, Oleyl, Benzyl).

Bevorzugt steht Y⁻ für OH⁻, sowie für die Anionen gesättigter und ungesättigter Carbonsäuren mit 1 bis 18 C-Atomen, wie z.B. der Essig-, Propion-, Benzoe-, Malein-, 2-Ethylhexan- oder Ölsäure.

Bevorzugt sind somit Katalysatoren in welchen unabhängig
- X: Lithium, Natrium oder Kalium oder Tetraalkylammonium der Formel (NR¹R²R³R⁴)⁺ bedeutet, worin R¹ bis R⁴ unabhängig voneinander für Methyl-, Ethyl-, 2-Hydroxyethyl-, Propyl-, 2-Hydroxypropyl-, Butyl-, Nonyl-, Dodecyl-, Oleyl- oder Benzyl- steht und
- Y: Hydroxyl bedeutet oder für Phenolat- oder die Anionen der Essig-, Propion-, Benzoe-, Malein-, 2-Ethylhexan- oder Ölsäure steht.

Außerdem sind Carboxylate auch dann katalytisch wirksam, wenn sie in eine Polymerkette eingebaut sind. Beispiele hierfür sind hydrolysierte oder teilweise hydrolysierte Polyvinylacetat-Dispersionspolymere, Ethylen-Vinylacetat-Dispersionspolymere, mit CarboxylatGruppen stabilisierte Polymer-Dispersionen oder Acrylat-Dispersionspolymere. Die Carboxylat-Gruppen können auch als Nebenkomponente in Polymer-Dispersionen vorliegen oder auch erst im Verlauf der Lagerung der Klebstoff-Dispersion durch z.B. Hydrolyse, ggf. gezielt zur Zugabe entsprechender Vorstufen-Verbindungen bzw. von Stoffen, aus denen sich diese katalytisch wirksamen Carboxylate gebildet werden bzw. sich wärend der Lagerung bilden.

Tabelle 1 zeigt den Aufbau der erfindungsgemäßen Zubereitungen. Außer den für die Erfindung maßgeblichen Katalysatoren enthalten sie isocyanatvernetzbare Polymerdispersionen, festes Isocyanat-Dimer, Desaktivierungsamin, Emulgatoren, Schutzkolloide und weitere Hilfsstoffe. Der Anteil der Isocyanat-reaktiven Polymerdispersionen liegt bei 20 - 99 Gew.-% der Zubereitung, der Anteil der desaktivierten Festoffisocyanate bei 0,1 - 5 Gew.-%, der Anteil der Hilfs und Zusatzstoffe bei 0 - 80 Gew.-% und der erfindungsgemäße Anteil an Katalysator liegt bei 0,05 - 1,5 Gew.-%.

**Tabelle 1: Aufbau der erfindungsgemäßen Zubereitungen**

| **Bestandteile der erfindungsgemäßen Zubereitungen** | **Funktion** | **Menge Gew.-%** |
|---|---|---|
| Oligomeres Feststoff-Isocyanat | Vernetzer | 0,1- 5 |
| Desaktivierungsamin | Stabilisierung des Isocyanat-Oligomers | * |
| Emulgatoren/Schutzkolloide | Stabilisierung der Scher- und Koagulationsstabilität der Dispersion | Nach Bedarf |
| Isocyanat-reaktive Polymerdispersion | Klebstoff-Polymer | 20 - 99 |
| Erfindungsgemäßer Katalysator | Beschleunigt die Umsetzung des aus dem Isocyanat-Oligomer freigesetzten monomeren Isocyanats | 0,1 - 1,5 |
| Hilfsstoffe | Weichmacher, Füllstoffe, Antioxidantien, Mikrobenschutzmittel, Entschäumer, u.a. | 0 - 80 |
| Verdicker | Stabilisierung der Zubereitungen gegen Sedimentation durch erhöhte Viskosität | Nach Bedarf |

| | | |
|---|---|---|
| *: entsprechend der vorhandenen Menge des Isocyanat-Dimer 0,5 bis 30 Mol-% Amingruppen gerechnet auf die gesamten Isocyanatgruppen. | | |

Für die erfindungsgemäßen Zubereitungen eignen sich die bekannten isocyanatreaktiven wässrigen Dispersionen von Homo- und Co-Polymerisaten olefinisch ungesättigter Monomere und Polyurethandispersionen. Bevorzugte Polymerdispersionen sind isocyanatreaktive Polyurethan- bzw. Polyharnstoffdispersionen sowie Polymerisate des 2-Chlorbutadiens. Geeignete Polymerisate olefinisch ungesättigter Monomere werden z.B. in der EP-A 0 206 059, beschrieben. Es handelt sich beispielsweise um Homo- und Co-Polymerisate auf Basis von Vinylestern von Carbonsäuren mit 2 bis 18 C-Atomen, bevorzugt mit 2 bis 4 C-Atomen, wie z.B. Vinylacetat. Diese können gegebenenfalls mit bis zu 70 Gew.-% bezogen auf die Gesamtmenge an anderen olefinisch ungesättigten Monomeren und/oder Homo- oder Copolymerisaten von (Meth)Acrylsäureestem von Alkoholen mit 1 bis 18 C-Atomen, bevorzugt mit 1 bis 4 C-Atomen, wie z.B. (Meth)Acrylsäure-, -methyl-, -ethyl-, -propyl-, -hydroxyethyl- oder -hydroxypropyl-estem eingesetzt werden. Isocyanatreaktive Funktionen entstehen durch Co-Polymerisation OH- oder NH-funktioneller Monomerer, wie z.B. Hydroxyethyl- oder Hydroxypropyl-(meth)acrylat, Butandiol-monocrylat, ethoxylierter oder propoxylierter (Meth)Acrylate, N-Methylol-acrylamid, tert.-Butylamino-ethyl-methacrylat oder (Meth)Acrylsäure. Auch Glycidylmethacrylat und Allylglycidylether können copolymerisiert werden. Die anschließende Umsetzung der Epoxygruppen mit Aminen oder Aminoalkoholen führt dann zu sekundären Aminogruppen.

Ebenfalls eignen sich wässrige Dispersionen von Polymerisaten bzw. Copolymerisaten des 2-Chlorbutadien-1,3, gegebenenfalls mit anderen olefinisch ungesättigten Monomeren der oben beispielhaft genannten Art. Diese Dispersionen weisen z.B. einen Chlorgehalt von 30 bis 40 Gew.-%, bevorzugt einen Chlorgehalt von 36 Gew.-% auf. Die Reaktivität der a priori nicht isocyanatreaktiven Polymerisate des 2-Chlorbutadiens ergibt sich durch einen im Verlauf des Herstellprozesses ablaufenden Austausch hydrolysierbarer Cl-Gruppen durch OH-Gruppen oder gemäß der EP-A 0 857 741 (Beispiele von Polychloroprendispersionen mit unterschiedlichen Hydrolysegraden, Tabelle 1, Seite 5 mit CR-Dispersionen 1 bis 4).

Geeignete wässrige Polyurethandispersionen sind solche, wie sie im Stand der Technik beschrieben sind, z.B. in der US-A 3 479 310, US-A 4 092 286, DE-A 2 651 505, US-A 4 190 566, DE-A 2 732 131 oder DE-A 2 811 148.

Besonders bevorzugt sind Dispersionen isocyanatreaktiver Polyurethane, die aus kristallisierten Polymerketten aufgebaut sind, welche bei Messung mittels thermomechanischer Analyse bei Temperaturen < 110°C, bevorzugt bei Temperaturen < 90°C und besonders bevorzugt bei Temperaturen < 60°C zumindest partiell dekristallisieren. Die erfindungsgemäßen Zubereitungen werden insbesondere für die Herstellung von Beschichtungen oder Klebeverbindungen eingesetzt, welche nach Trocknung und kurzzeitiger Wärmeaktivierung bei der Herstellung der Klebverbindung ohne weitere zusätzliche Wärmezufuhr im Verlauf einiger Tage vernetzen. Diese besitzen eine deutlich verbesserte Erweichungstemperatur, Wasser- und Lösemittelfestigkeit. Zur Herstellung derartiger Klebeverbindungen wird der auf dem zu verklebenden Substrat getrocknete Klebstoffauftrag durch kurzzeitiges, vorzugweise weniger als 60 Sekunden andauerndes Erwärmen auf T > 60°C dekristallisiert und im dekristallisierten Zustand gefügt. Hierzu kann auch der Klebstoffauftrag auf einem Substrat getrocknet und dann mit einem durch Erwärmung plastisch erweichten Folienmaterial verpreßt werden, sodaß die Folie im Kontakt mit dem Klebefilm eine Temperatur oberhalb der Dekristallisationstemperatur des Polymers im Klebfilm annimmt. Eine weitere bevorzugte Verwendungsform der Zubereitungen ist die Herstellung von latentreaktiven wärmeaktivierbaren Vorbeschichtungen, Filmen oder Pulvern, welche bei Temperaturen unter der Dekristallisation des Polymers lagerfähig sind und die beim Erwärmen über diese Grenze vernetzen.

Die festen oligomeren Isocyanate weisen vorzugsweise Schmelz- bzw. Erweichungstemperaturen von > 30°C auf. Bevorzugt werden Dimerisierungsprodukte des TDI bzw. IPDI. Der Anteil der Feststoffisocyanate liegt in den Zubereitungen, gerechnet auf den Polymeranteil, im Bereich von 0,1 bis 10 Gew.-%, bevorzugt im von Bereich 0,5 bis 5 Gew.-%. Besonders bevorzugt ist der Bereich von 0,5 bis 3,5 Gew.-%. Sie werden - sinnvollerweise vor Abmischung mit den Polymerdispersionen - unter Einwirkung hoher Scherkräfte, z. B. unter Verwendung einer Perlmühle, in einer wässrigen Lösung oder Dispersion der Deaktivierungsamine auf einem mittleren Teilchendurchmesser von <100 µm, vorzugsweise < 15 µm gemahlen und dispergiert.

Zur "Desaktivierung", "Retardierung" bzw. "Stabilisierung" (je nach Literaturstelle werden einer oder verschiedene dieser Begriffe als Synonyme verwendet) des dispergierten Feststoff-Isocyanats in der wässrigen Dispersionszubereitung werden die an der Oberfläche der Feststoffisocyanat-Partikel freiliegenden Isocyanatgruppen mit Desaktivierungsaminen umgesetzt. Zur Oberflächenaktivierung der oligomeren Feststoff-Polyisocyanate wurden Mono- und/und Polyamine verwendet. Zu diesem Zweck können längerkettige Polyetheramine, wie in EP-A 0 922 720 beschrieben, z.B. Jeffamin^{®} D 400 oder Jeffamin^{®} T 403 (Huntsman Corp., Utah, USA) eingesetzt werden. Besonders bevorzugt sind Mono-, Di- bzw. Polyamine, die gemäß DE-A 10 140 206 anionische Gruppen wie Carboxylat- oder Sulfonat-Gruppen als Bestandteil der Molekülstruktur aufweisen. Bei den ionischen Gruppen handelt es sich als Bestandteil der Molekülstruktur tragenden Polyaminen um Aminosulfonate der Formel

H₂N-A-NH-B-SO₃⁽⁻⁾ Z⁽⁺⁾,

worin A und B unabhängig voneinander für Kohlenwasserstoff-Segmente mit 2 bis 6 Kohlenstoffatomen stehen und Z für ein Alkalimetall-Atom oder Tetraalkylammonium der Formel (NR¹R²R³R⁴)⁺ steht. Bei dem Aminsulfonat handelt es sich bevorzugt um ein Salz der 2-(2-Amino-ethylamino)-ethansulfonsäure, besonders bevorzugt um ein Salz des Taurins (2-Amino-ethansulfonsäure.

Die Desaktivierungsamine werden in einer solchen Menge eingesetzt, daß auf 100 Mol-% der im Feststoffisocyanat vorhandenen Isocyanatgruppen 0,5 bis 30 Mol-%, bevorzugt 3 bis 15 Mol-% Amingruppen kommen. Bei dieser Gelegenheit reagieren die in der Teilchenoberfläche zugänglichen Isocyanatgruppen mit dem Desaktivierungsamin. Infolge der gegenüber Isocyanat-Gruppen sehr hohen Reaktivität dieses aliphatischen Amins im Vergleich zu Wasser bildet sich praktisch ausschließlich mit diesem "Desaktivierungsamin" eine Polyharnstoffschicht auf der Oberfläche der dispergierten Isocyanat-Teilchen. Solange ausreichende Mengen Amin im System enthalten sind, ist das Isocyanat weitgehend der Wasser-Reaktion entzogen. Wenn ein kleiner Anteil der NCO-Gruppen dennoch mit Wasser reagiert, wird das entstehende CO₂ durch das Stabilisierungsamin resorbiert

Gegenstand der vorliegenden Erfindung ist auch die Verwendung der erfindungsgemäßen Zubereitungen als Bindemittel sowie für Klebeverbindungen oder Herstellung von Beschichtungen sowie die Verwendung zur Herstellung einer latent vernetzenden Klebstoffschicht.

Die Zubereitungen können als Zusatzstoffe auch weitere hydroxy- oder aminofunktionelle nieder- bis hochmolekulare Verbindungen enthalten, welche ebenfalls mit den oligomeren Feststoff-Isocyanaten und mit den gegebenenfalls daraus durch thermische Spaltung entstehenden monomeren Isocyanaten reagieren können. Insbesondere bei Dispersionen von Polymeren mit geringem Gehalt an Isocyanat-reaktiven Gruppen kann die Mitverwendung solcher funktioneller Zusätze die erfindungsgemäße Verminderung der freigesetzen monomeren Isocyanate unterstützen. Da aber diese Verbindungen bezüglich der Isocyanatreation in Konkurrenz zu den zu vernetzenden Polymeren stehen, muß ihr Verbrauch gegebenfalls berücksichtigt werden, um eine ungenügende Vernetzung des Klebstoff-Polymers zu verhindern. Als niedermolekulare Verbindungen werden solchemit Molekulargewichten zwischen 60 und 500 g/mol verstanden, unter hochmolekularen Verbindungen solche, deren Molekulargewichte zwischen 500 und 10000 g/mol liegen. Beispiele sind Ethanolamin, Diethanolamin, Ethandiol, Butandiol, Glycerin, Pentaerythrit, sowie endständig ethoxylierte Polypropylenglykole, Polyvinylakohole oder Polyamine.

Als weitere Hilfs- und Zusatzstoffe können die Zubereitungen auch solche ohne isocyanatreaktive Gruppen enthalten, ferner Netzmittel, Emulgatoren, Verdickungsmittel, Schutzkolloide und gegebenenfalls Stabilisatoren, Alterungsschutzmittel, Füllstoffe, Farbpigmente, Weichmacher, nichtlösende Flüssigkeiten und weitere Hilfsmittel.

Ebenfalls Gegenstand der vorliegenden Anmeldung sind Substrate beschichtet mit aus den erfindungsgemäßen Zubereitungen erhältlichen Schichten.

Die nachfolgenden Stoffe werden in den Beispielen eingesetzt:

### I. Isocyanatreaktive Polymerdispersion

Dispercoll^{®} U 53, Polyurethandispersion der Bayer MaterialScience AG, 51368 Leverkusen; Feststoffgehalt ca. 40 Gew.-%.; Isocyanat-reaktives Polymer aus linearen Polyurethanketten auf Basis eines Adipinsäure / Butandiol-Polyesters mit HDI / IPDI als Isocyanatkomponente. Das Polymer kristallisiert nach dem Trocknen der Dispersion und Abkühlen des Films auf 23°C. Bei Messung mittels thermomechanischer Analyse ist der Film bei Temperaturen < + 65°C weitgehend dekristallisiert.

### II. Oligomeres Feststoff-Isocyanat

Dimer des 2,4-Toluylendiisocyanat: Metalink^{®} U der Acima AG; CH9471 Buchs, Schweiz.

### III. Desaktivierungsamine:

Beispiel-Reihe a: Jeffamine^{®} T 403; 3-funktionelles Polyetheramin, MW = ca. 450, Hersteller Huntsman Corp., Utah, USA. Beispiel-Reihe b: Natriumsalz der 2-(2-Amino-ethylamino)-ethansulfonsäure; ionisch modifiziertes Stabilisierungsamin; Bayer MaterialScience AG, 51368 Leverkusen.

### IV. Hilfsstoffe:

**Agitan^{®} 281**
   Entschäumer; Hersteller: Münzig Chemie GmbH, D-74076 Heilbronn
**Necal^{®} BX**
   Emulgator; Hersteller: BASF AG, D-67056 Ludwigshafen
**Tamol^{®} NN 4501 (45 %-ig in Wasser)**
   Schutzkolloid; Hersteller: BASF AG, 67056 Ludwigshafen
**Borchigel^{®}L 75**
   Verdickungsmittel; Hersteller Borchers GmbH, D-40765 Monheim
**Walocel^{®} MT 4000PV**
   Verdicker; Hersteller: Wolff Cellulosics GmbH & Co. KG, 29656 Walsrode

### IV. In den erfindungsgemäßen Beispielen eingesetzte Katalysatoren:

### Beispiel - Nr. Katalysator

- 1, 2: Natriumacetat
- 3: Kaliumacetat
- 4, 5: Natriumpropionat
- 6: Natriumoleat
- 7,8: Tetrabutyl-ammonium-hydroxid
- 9: Tetramethylammoniumacetat
- 10, 11: Trimethyl-2-hydroxypropyl- ammonium-2-ethylhexanoat

### V. In den Vergleichsbeispielen eingesetzte Katalysatoren

Diese Verbindungen werden in der Literatur (Methoden der Organischen Chemie, Houben-Weyl, Band E 20, im Kapitel 14; D. Dieterich Polyisocyanurate, Seite 1739 ff und die dort zitierten weiteren Literaturstellen) als wirksame Trimerisierungskatalysatoren angegeben. Sie sind zur Lösung der der Erfindung zugrundeliegenden Aufgabe ungeeignet, denn sie führen offenbar zu keiner ausreichend schnellen Verminderung der nachweisbaren Menge an TDI-Monomer, welches bei erhöhter Temperatur aus der Klebstoffschicht ausgast.

| **Vergleichs-Beispiel Nr.** | **Katalysator** |
|---|---|
| 12, 13 | Amidin : (DBU) 1,8-Diazabicyclo[5.4.0]undenc-7-ene |
| 14, 15, 16 | Mannichbase des Phenols: 2,4,6-Tris-(N,N-dimethylaminomethyl)-phenol |
| 17 | nicht basisches quartemäres Ammoniumsalz: Tetrabutylammoniumbromid |

### Die Herstellung der Zubereitungen:

Die Zubereitungen werden wie folgt in 2 Schritten hergestellt:

### 1. Herstellung der desaktivierten Dispersion des TDI-Dimer in Wasser

Tabelle 2 zeigt die Grundrezepturen a und b der desaktivierten Isocyanat-Dispersionen für die Desaktivierungsamine a und b

**Tabelle 2: Grundrezepturen a und b der desaktivierten Isocyanat-Dispersionen für die Desaktivierungsamine a und b (Alle Mengenangaben in Gewichtsteilen)**

| **Funktion** | **Stoff** | **Grundrezeptur** | |
|---|---|---|---|
| | | **a** | **b** |
| **Dispergiermedium** | Wasser | 500 | 536 |
| **Desaktivierungsamin a** | **Jeffamine^{®}** T-403 | 25 | - |
| **Desaktivierungsamin b** | Natriumsalz der 2-(2-Amino-ethylamino)-ethansulfonsäure (40%-ige wässrige Lösung) | - | 59 |
| Oligomeres Feststoff-Isocyanat | Metalink^{®} U (TDI-Dimer) | 410 | 395 |
| Entschäumer | Agitan^{®} 281 | 1 | - |
| Schutzkolloid | Tamol^{®} NN 4501 (45 %-ig in Wasser) | 10 | - |
| Detergens | Nekal^{®} BX (salzfrei) | 4 | - |
| Verdicker | Walocel^{®} MT 4000PV | 50 | 10 |
| Summe | | 1000 | 1000 |

Im ersten Schritt wird das feste Metalink^{®} U (TDI-Dimer) nach den in Tabelle 2 gezeigten Grundrezepturen a) oder b) unter Verwendung geeigneter Mahl- und Dispergiereinrichtungen in Anwesenheit des Desaktivierungsamins (Jeffamine^{®} T 403 [Versuchserie a] bzw. das Natriumsalz der 2-(2-Amino-ethylamino)-ethansulfonsäure [Versuchserie b]) in Wasser dispergiert. Für die feinteilige Dispergierung geeignete Geräte sind beispielsweise Dissolver, Dispergiergeräte vom Rotor-Stator-Typ, Kugelmühlen oder Perlmühlen, wobei die Temperator nicht über 40°C steigen darf. Zur Durchführung der Beispiele wurde die TORUSMILL^{®} von VMA-Getzmann GmbH (D-51580 Reichshof, Deutschland) verwendet. Die Vordispergierung und der Mahlvorgang werden im gleichen stark gekühlten Doppelwandgefäß aus Edelstahl durchgeführt. Man stellt zunächst eine Mischung aus Wasser, Entschäumer, ggf. Schutzkolloid, ggf. Detergens und Deaktivierungsamin her, in die zum Schluß das TDI-Dimer eingerührt wird. Dann setzt man die Mahlkammer der Perlmühle ein, die zu 70 Volumen-% mit Zirkonoxid-Kugeln (1,2 - 1,7 mm Durchmesser) gefüllt ist. Während des Mahlvorgangs wird die Mahlkammer intensiv gekühlt, sodaß die Temperatur in der Dispersion unter 30°C bleibt. Der Mahlvorgang dauert etwa 60 Minuten und ergibt im Mittel einen Teilchendurchmesser von ca. 10 µm, mit einem Maximum bei 20 µm. Gleichzeitig mit dem Mahlen werden die TDI-Dimer-Teilchen durch Oberflächenreaktion mit den anwesenden Aminen a oder b desaktiviert. Zuletzt wird zur Vermeidung einer Sedimentation die Viskosität der Suspension durch Zusatz der Verdickerlösung auf ca. 5000 mPas angehoben. Beide Grundrezepturen enthalten das Vernetzungsmittel TDI-Dimer in etwa in gleicher Konzentration, von 40 Gew. -%.

### 2. Herstellung der die Katalysatoren enthaltenden Klebstoff-Zubereitungen unter der Verwendung der im ersten Schritt hergestellten Grundrezepturen a oder b

In einem in der Größe passenden Edelstahl- oder Glasgefäß werden 100 Gew. Teile der Polymerdispersion - Dispercoll^{®} U 53 - vorgelegt. Unter Rühren mit einem Dissolver (Dispermat) werden dann 5 Gew. Teile der desaktivierten TDI-Dimer-Suspensionen sowie zusätzlich jeweils einer der in folgenden Tabellen aufgeführten Katalysatorenen in den angegebenen Mengen zugegeben: Tabelle 3 für erfindungsgemäße Beispiele und Tabelle 4 für nicht erfindungsgemäße Beispiele. Da die desaktivierten Suspensionen des Metalink^{®} U (TDI-Dimer) ca. 40 Gew.-% festes Isocyanat enthalten, entspricht diese Menge ca. 2,0 Gew.-Teilen festen Isocyanats auf 100 Teile Polymerdispersion. Die Mischungen werden zur Homogenisierung 5 min. bei 1000 min⁻¹ gerührt. Abschließend wird soviel Verdickungsmittel hinzudosiert, daß die fertigen Zubereitungen eine Viskosität in der Größenordnung von ca. 2500 mPas besitzen (ca. 2 Gew.-% - bezogen auf die Gesamtmischung - der Lösung von Borchigel L 75).

**Tabelle 3: Erfindungsgemäße Beispiele**

| **Komponenten der Klebstoffbereitungen** | **Zubereitung** | | **Gew-Tle** |
|---|---|---|---|
| | **a** | **b** | |
| Dispercoll^{®} U 53 | -- | -- | 100 |
| Grundrezeptur der desaktivierten Metalink^{®} U- Dispersion in Wasser | **Desaktivierung:** Jeffamine^{®} T 403 | **Desaktivierung:** 2-(2-Amino-ethylamino)-ethansulfonsäure Na-Salz | 5 |
| Borchigel^{®} L 75 Lösung | -- | | ca. 2 |

| | **Beispiele Nr.** | | |
|---|---|---|---|
| **Erfindungsgemäße Katalysatoren:** | | | |
| Natriumacetat | | 1b | 0,1 |
| Natriumacetat | | 2b | 0,2 |
| Kaliumacetat | | 3b | 0,2 |
| Natriumpropionat | | 4b | 0,1 |
| Natriumpropionat | | 5b | 0,2 |
| Natriumoleat | | 6b | 0,2 |
| Tetrabutyl-ammonium-hydroxid | | 7b | 0,1 |
| Tetrabutyl-ammonium-hydroxid | 8a | 8b | 0,2 |
| Tetramethyl-ammoniumacetat | | 9b | 0,2 |
| Trimethyl-2-Hydroxypropyl-ammonium 2-ethylhexanoat | | 10b | 0,2 |
| Trimethyl-2-hydroxypropyl-ammonium 2-ethylhexanoat | 11a | 11b | 0,4 |

**Tabelle 4: Vergleichsbeispiele**

| **Komponenten der Klebstoffbereitungen** | **Zubereitung** | | **Gew-Tle** |
|---|---|---|---|
| | **a** | **b** | |
| Dispercoll^{®} U 53 | | | 100 |
| Grundrezeptur der desaktivierten Metalink^{®} U (TDI-Dimer)-Dispersion in Wasser | **Desaktivierung:** Jeffamine^{®} T-403 | **Desaktivierung:** 2-(2-Amino-ethylamino)-ethansulfonsäure Na-Salz | 5 |
| Borchigel^{®} L 75 Lösung | | | ca. 2 |

| **Katalysatoren:** | **Beispiele Nr.** | | |
|---|---|---|---|
| Amidin: (DBU) 1,8-Diazabicyclo [5.4.0] undenc-7-ene | - | 12b | 1,1 |
| Amidin: (DBU) 1,8-Diazabicyclo [5.4.0] undenc-7-ene | - | 13b | 1,7 |
| Mannichbase des Phenols: 2,4,6-Tris-N,N.dimethylaminomethyl)-phenol | - | 14b | 0,5 |
| Mannichbase des Phenols: 2,4,6-Tris-N,N.dimethylaminomethyl)-phenol | - | 15b | 0,9 |
| Mannichbase des Phenols: 2,4,6-Tris-N,N.dimethylaminomethyl)-phenol | - | 16b | 1,8 |
| nicht basischer Katalysator: Tetrabutylammoniumbromid | - | 17b | 0,1 |

### Diskussion der Ergebnisse

In Tabelle 5 wird die Definition des Stands der Technik bezüglich der TDI-Monomer Abspaltung (Thermodesorption während 30 min. bei 90°C mit anschließender Analyse der flüchtigen Komponenten (GC-Messung)) aus trockenen Klebfilmen von Zubereitungen ohne Katalysator durchgeführt. Die Zubereitungen zeigen eine Variation des Anteils an TDI-Dimer (in Form der Suspension mit der Grundrezeptur b, wie sie gemäß Tabelle 2 hergestellt wurde). Mit abnehmendem Anteil an Metalink^{®} U (TDI-Dimer) nimmt die Menge an abgespaltenem monomeren TDI ab. Aber aufgrund der mit fallender TDI-Dimer-Menge ebenfalls verringerten Vernetzung ergeben sich bei Messungen des Softening Point (Wärmefestigkeitsmessung für die Schuhindustrie) auf Weichmacher- bzw. Öl-haltigen Substraten (Weich-PVC bzw. NORA-Gummi) keine ausreichenden Werte der Erweichungstemperatur der Klebung in der Wärme.

**Tabelle 5: TDI-Abspaltung aus trockenen Klebfilmen von Zubereitung b (s. Tabelle 3 oder 4) ohne Katalysator**

| **Metalink^{®} U (TDI-Dimer)-Grundrezeptur auf 100 Teile Dispercoll^{®} U 53** | **TDI-Monomerbestimmung durch GC** | **Softening point [°C]** | | |
|---|---|---|---|---|
| Gew. Teile | (ppm) | PVC 30% DOP | Nora | KASX |
| 10 | 1700 | 107 | 138 | 146 |
| 7 | 1200 | 105 | 129 | 141 |
| 5 | 570 | 96 | 120 | 133 |
| 4 | 200 | 88 | 117 | 132 |
| 3 | 15 | 77 | 94 | 119 |
| 2 | 7 | 68 | 83 | 109 |

Die in diesen Zubereitungen verwendete Polymerdispersion (Dispercoll^{®} U 53) hat einen Festgehalt von 40 %; ebenso die Grundrezeptur b des dispergierten TDI-Dimer.

### Verfahren zur Auswahl geeigneter Katalysatoren:

Eine Abspaltung von flüchtigem monomeren TDI aus den hier betrachteten Zubereitungen auf Basis von Polymerdispersionen und desaktivierten Metalink^{®} U (TDI-Dimer) kann unter erfindungsgemäßer Verwendung geeigneter basischer Katalysatoren vermieden werden. Die Auswahl des geeigneten Katalysators findet vor dem Hintergrund statt, dass er die Reaktion der Isocyanatgruppe von freigesetztem Isocyanat-Monomer (TDI) mit isocyanatreaktiven Gruppen, einschließlich der Uretdiongruppe selbst, stärker beschleunigen muss als die Spaltung des dimeren Isocyanats (Uretdion) zum Monomer (TDI). Die thermische Labilität von Isocyanat-Dimeren wird bekanntlich (Produktdatenblatt Metalink^{®} U; Acima AG, CH-9471 Buchs) durch viele Katalysatoren vergrößert, sodaß die Temperatur der Freisetzung von monomerem Isocyanat bei falscher Wahl des Katalysators noch herabgesetzt bzw. die Spaltungsgeschwindigkeit des Oligomeren gesteigert werden könnte.

Basische Alkalisalze (Beispiele 1b - 6b; Ergebnisse: Tabelle 6) zeigen auch bei niedrigen Konzentrationen eine hervorragende Wirksamkeit im Hinblick auf die mit ihrer Hilfe erreichte sehr niedrige Menge an flüchtigem TDI-Monomer. Es ist wichtig, die Salze in möglichst niedriger Konzentration in den Klebstoff-Zubereitungen einzusetzen, um negative Auswirkungen auf die rheologische Stabilität (Scherstabilität und Koagulationsstabiltät) der mit Polymerdispersionen hergestellten Zubereitungen zu vermeiden.

Basische Tetraalkylammonium-Verbindungen (Beispiele 7b - 11b; Ergebnisse: Tabelle 6) sind ebenfalls erfindungsgemäß sehr wirksame Katalysatoren. Daß die Basiszität des Katalysators für die erfindungsgemäße Wirksamkeit in der Zubereitung wichtig ist, zeigt der Vergleich mit Tetrabutylammoniumbromid (Beispiel 17b; Ergebnisse: Tabelle 7), welches wesentliche keine Verminderung der freigesetzten TDI-Menge bewirkt, während das basische Tetramethylammoniumacetat bei gleicher niedriger Konzentration die Freisetzung des monomeren TDI sehr wirksam unterdrückt (Beispiel 9b; Ergebnisse: Tabelle 6).

**Tabelle 6: Einfluß von Art und Menge von erfmdugsgemäßem Katalysator auf die TDI-Freisetzung**

| **Beispiel Nr.** | **Katalysator** | **Konzentration in der Zubereitung [Gew.-%]** | **TDI aus dem Klebfilm (TDS/GC 30min 90°C) [ppm]** |
|---|---|---|---|
| Stand der Technik Zubereitung a und b | Keiner | - | 470 - 670 |
| 1b | Natriumacetat | 0,1 | 40 - 100 |
| 2b | Natriumacetat | 0,2 | < 10 |
| 3b | Kaliumacetat | 0,2 | < 10 |
| 4b | Natriumpropionat | 0,1 | 11 - 24 |
| 5b | Natriumpropionat | 0,2 | 15 |
| 6b | Natriumoleat | 0,2 | 48 |
| 7b | Tetrabutylammonium-hydroxid | 0,1 | 190 |
| 8a | Tetrabutylammonium-hydroxid | 0,2 | 30 |
| 8b | Tetrabutylammonium-hydroxid | 0,2 | 30 |
| 9b | Tetramethylammonium-acetat | 0,2 | < 10 |
| 10b | Trimethyl-2-hydroxypropyl-ammonium 2-ethylhexanoat | 0,2 | 30 - 70 |
| 11a | Trimethyl-2-hydroxypropyl-ammonium 2-ethylhexanoat | 0,4 | <10 |
| 11b | Trimethyl-2-hydroxypropyl- ammonium 2-ethylhexanoat ammonium 2-ethylhexanoat | 0,4 | <10 |

**Tabelle 7: Vergleichsbeispiele mit ungeeigneten Katalysatoren**

| **Vergleichs-Beispiel Nr.** | **Katalysator** | **Konzentration in der Zubereitung [Gew.-%]** | **TDI aus dem trockenen Klebefilm bei 90°C [ppm]** |
|---|---|---|---|
| Stand der Technik | ohne | - | 470 - 670 |
| 12b: Amidin | DBU | 1,1 | 620 |
| 13b: Amidin | DBU | 1,7 | 510 |
| 14b: Mannichbase | 2,4,6-Tris-(N,N-dimethylamino-methyl)-phenol | 0,5 | 490 |
| 15b: Mannichbase | 2,4,6-Tris-(N,N-dimethylamino-methyl)-phenol | 0,9 | 470 |
| 16b: Mannichbase | 2,4,6-Tris-(N,N-dimethylamino-methyl)-phenol | 1,8 | 410 |
| 17b: nicht basisches Salz | Tetrabutylammoniumbromid | 0,1 | 220 |

| | | | |
|---|---|---|---|
| DBU: 1,3-Diazabicyclo[5.4.0]undecen | | | |

### Messung der TDI-Monomer-Abspaltung

Für die Bestimmung der TDI-Freisetzug aus den getrockneten Klebfilmen (ca. 170µm) wurden Proben der Klebstofffilme in das TDS-System der der Fa. Gerstel GmbH & Co- KG (Aktienstrasse 232-234, 45473 Mülheim) eingesetzt und 30 min. bei 90°C unter einem trockenen Gasstrom getempert. Die unter diesen Bedingungen flüchtigen Bestandteile wurden zunächst in einer Kühlfalle (-150°C) gesammelt und nach beendeter Thermodesorption mit dem GC Agilent^{®} 6890N (Agilent Technologies Deutschland GmbH, Hewlett-Packard Str. 8 D-76337 Waldbronn) analysiert.

### Methode:

| **Thermodesorption:** | | | **GC-Parameter:** | |
|---|---|---|---|---|
| Anfangstemperatur | 20°C | | Anfangstemperatur: | 50°C |
| Aufheizrate | 60°C/min | | Anfangszeit: | 2 min. |
| Haltetemperatur | 90°C | | 1. Aufheizrate: | 25°C/min. |
| Haltezeit | 30 min. | | Haltetemperatur: | 160°C |
| **KAS-Parameter:** | | | Haltezeit: | 0 min. |
| Anfangstemperatur: | -150°C | | **2. Aufheizrate:** | 10°C/min. |
| Heizrate: | 12°C/sec. | | **Haltetemperatur:** | 300°C |
| Haltetemperatur: | 280°C | | Säule: | DB-5 MS |
| Haltezeit: | 3 min. | | Detektor: | FID |

### Herstellung der Proben für die Bestimmung des Softening Point:

Die Prüfkörper aus KASX (Nitrilkautschuk), Nora-Gummi (SBR) bzw. Weich-PVC (30% DOP) werden unmittelbar vor dem Klebstoffauftrag mit Schleifpapier (Körnung 80) angerauht. Die Klebstofformulierung wird mit einem Pinsel beidseitig auf die 20 x 10 mm große Klebefläche aufgetragen. Die Klebstoffschicht wird 60 min. bei 23°C / 50% rel. Feuchte getrocknet.

### Wärmeaktivierung:

Die Klebeflächen werden mit einem IR-Strahler (Fa. Funk; Schockaktiviergerät 2000) bestrahlt und der Klebefilm abhängig von dem Substrat auf eine Oberflächentemperatur von ca. 85 °C (PVC mit 30% DOP), ca. 109°C (SBR) bzw. ca. 158°C (Nitrilkautschuk) erwärmt. Die Dekristallisationstemperatur der Polymerkette der verwendeten Polyurethandispersion (Dispercoll^{®} U 53) liegt im Bereich 50 - 65°C. Die Verklebung erfolgt sofort nach Wärmeaktivierung der Klebstoff-beschichteten Prüfkörper, indem die aktivierten Klebeschichten gegeneinandergelegt und in einer Presse eine Minute lang bei 4 bar verpresst werden. Die so hergestellten Prüfkörper werden 7 Tage bei 23°C und 50% rel. Feuchte gelagert.

### Wärmeprüfung (Softening Point-Bestimmung):

Die Prüfkörper werden mit 4 kg belastet und in einem Heizschrank innerhalb von 30 min. auf 40°C temperiert. Anschließend werden die Prüfkörper mit einer linearen Heizrate von 0,5 °C/min. auf 150°C aufgeheizt. Die Erweichungstemperatur, d.h. die Temperatur in °C bei der die Klebung unter der 4kg Last versagt, wird registriert. Es werden jeweils 5 Einzelmessungen durchgeführt.

Zum Vergleich: Verklebungen unter Verwendung von Dispercoll^{®} U 53 weisen ohne Vernetzung unter diesen Bedingungen eine Erweichungstemperatur (Softening Point) von ca. 60°C auf. Die Erweichungstemperatur nach Isocyanat-Vernetzung liegt bei Verwendung von Dispercoll^{®} U 53 als Klebstoff-Polymer je nach Substrat im Bereich 90 - 150°C (siehe hierzu Tabelle 5).

## Patentansprüche

1. Wässrige Zubereitungen enthaltend
a) dispergierte Polymere mit isocyanat-reaktiven Gruppen,
b) dispergierte oberflächendesaktivierte oligomere Feststoff-Polyisocyanate
c) sowie mindestens einen Katalysator und der Katalysator oder die Gesamtheit der Katalysatoren die Reaktion der durch thermische Spaltung des oligomeren Polyisocyanate entstehenden monomeren Polyisocyanate stärker beschleunigt als die thermische Spaltung selbst,
**dadurch gekennzeichnet, dass** als Katalysatoren Verbindungen der Formel X⁺Y⁻ verwendet werden, in welcher unabhängig voneinander
X für Alkali- oder Tetraalkylammonium steht und
Y Hydroxyl bedeutet oder für Phenolat- oder die Anionen gesättigter oder ungesättigter Carbonsäuren mit 1 - 18 C-Atomen steht.

2. Zubereitungen gemäß Anspruch 1, **dadurch gekennzeichnet, dass** unabhängig voneinander
X Lithium, Natrium oder Kalium oder Tetraalkylammonium der Formel (NR¹R²R³R⁴)⁺ bedeutet, worin R¹ bis R⁴ unabhängig voneinander gesättigte oder ungesättigte Alkylreste mit 1 - 18 C-Atomen bedeuten und
Y Hydroxyl bedeutet oder für Phenolat- oder die Anionen gesättigter oder ungesättigter Carbonsäuren mit 1 - 18 C-Atomen steht.

3. Zubereitungen gemäß Anspruch 1, **dadurch gekennzeichnet, dass** unabhängig voneinander
X Lithium, Natrium oder Kalium oder Tetraalkylammonium der Formel (NR¹R²R³R⁴)⁺ bedeutet, worin R¹ bis R⁴ unabhängig voneinander für Methyl-, Ethyl-, 2-Hydroxyethyl-, Propyl-, 2-Hydroxypropyl-, Butyl-, Nonyl-, Dodecyl-, Oleyl- oder Benzyl- steht und
Y Hydroxyl bedeutet oder für Phenolat- oder die Anionen der Essig-, Propion-, Benzoe-, Malein-, 2-Ethylhexan- oder Ölsäure steht.

4. Zubereitungen gemäß Ansprüchen 1 bis 3, **dadurch gekennzeichnet, dass** sie 0,05 bis 1,5 Gew.-%, bezogen auf die gesamte Zubereitung, an Katalysator enthalten.

5. Zubereitungen gemäß Ansprüchen 1 bis 3, **dadurch gekennzeichnet, dass** sie 0,1 bis 0,7 Gew.-%, bezogen auf die gesamte Zubereitung, an Katalysator enthalten.

6. Zubereitungen gemäß Ansprüchen 1 bis 3, **dadurch gekennzeichnet, dass** sie 0,2 bis 0,5 Gew.-%, bezogen auf die gesamte Zubereitung, an Katalysator enthalten.

7. Zubereitungen gemäß Ansprüchen 1 bis 6, **dadurch gekennzeichnet, dass** zur Oberflächendesaktivierung der oligomeren Feststoff-Polyisocyanate Mono- und/oder Polyamine verwendet werden.

8. Zubereitungen gemäß Anspruch 7, **dadurch gekennzeichnet, dass** zur Oberflächendesaktivierung der oligomeren Feststoff-Polyisocyanate Mono- und/oder Polyamine verwendet werden, die ionische Gruppen als Bestandteil der Molekülstruktur tragen werden.

9. Zubereitungen gemäß Anspruch 8, **dadurch gekennzeichnet, dass** es sich bei den ionischen Gruppen als Bestandteil der Molekülstruktur tragenden Polyaminen um Aminosulfonate der Formel
H₂N-A-NH-B-SO₃ ⁽⁻⁾ Z⁽⁺⁾
handelt, worin A und B unabhängig voneinander für Kohlenwasserstoff-Segmente mit 2 bis 6 Kohlenstoffatomen stehen und Z für ein Alkalimetall-Atom oder Tetraalkylammonium der Formel (NR¹R²R³R⁴)⁺ wie in Ansprüchen 7 bis 8 definiert steht.

10. Zubereitungen gemäß Anspruch 9, **dadurch gekennzeichnet, dass** es sich bei dem Aminsulfonat um ein Salz der 2-(2-Amino-ethylamino)-ethansulfonsäure handelt.

11. Zubereitungen gemäß Anspruch 9, **dadurch gekennzeichnet, dass** es sich bei dem Aminsulfonat um ein Salz des Taurins (2-Aminoethansulfonsäure) handelt.

12. Zubereitungen gemäß Ansprüchen 1 bis 11, **dadurch gekennzeichnet, dass** als oligomere Feststoff-Polyisocyanate Dimerisierungsprodukte des TDI oder IPDI verwendet werden.

13. Zubereitungen gemäß Ansprüchen 1 bis 12, **dadurch gekennzeichnet, dass** als isocyanatreaktive Polymere Polyurethane verwendet werden.

14. Zubereitungen gemäß Ansprüchen 1 bis 12, **dadurch gekennzeichnet, dass** als isocyanatreaktive Polymere Polymerisate und Copolymerisate des 2-Chlorbutadiens verwendet werden.

15. Verfahren zur Herstellung von Zubereitungen gemäß Ansprüchen 1 bis 14, **dadurch gekennzeichnet, dass** man wässrige Dispersionen mindestens eines isocyanatreaktiven Polymers mit mindestens einem dispergierten oberflächendesaktivierten oligomeren Feststoff-Polyisocyanat und mindestens einem Katalysator vermischt, welcher die Reaktion der durch thermische Spaltung der oligomeren Polyisocyanate entstehenden monomeren Polyisocyanate stärker beschleunigt als die thermische Spaltung selbst.

16. Verwendung der Zubereitungen gemäß Ansprüchen 1 bis 14 als Bindemittel sowie für Klebeverbindungen oder Herstellung von Beschichtungen.

17. Verwendung gemäß Anspruch 16 zur Herstellung einer latent vernetzenden Klebstoffschicht.

18. Substrate beschichtet mit aus Zubereitungen gemäß Ansprüchen 1 bis 14 erhältlichen Schichten.

## Claims

1. Aqueous preparations comprising
a) dispersed polymers having isocyanate-reactive groups,
b) dispersed surface-deactivated oligomeric solid polyisocyanates
c) as well as at least one catalyst, and the catalyst or the totality of catalysts accelerates the reaction of the monomeric polyisocyanates which form by the thermal cleavage of the oligomeric polyisocyanates more strongly than the thermal cleavage itself,
**characterised in that** as catalysts compounds of the formula X⁺Y⁻ are used in which, independently of one another,
X stands for alkali metal or tetraalkylammonium, and
Y denotes hydroxyl or stands for phenolate or the anions of saturated or unsaturated carboxylic acids having 1 - 18 C atoms.

2. Preparations according to Claim 1, **characterised in that**, independently of one another,
X denotes lithium, sodium or potassium or tetraalkylammonium of the formula (NR¹R²R³R⁴)⁺, wherein R¹ to R⁴, independently of one another, denote saturated or unsaturated alkyl radicals having 1 - 18 C atoms, and
Y denotes hydroxyl or stands for phenolate or the anions of saturated or unsaturated carboxylic acids having 1 - 18 C atoms.

3. Preparations according to Claim 1, **characterised in that**, independently of one another,
X denotes lithium, sodium or potassium or tetraalkylammonium corresponding to the formula (NR¹R²R³R⁴)⁺, wherein R¹ to R⁴, independently of one another, stand for methyl, ethyl, 2-hydroxyethyl, propyl, 2-hydroxypropyl, butyl, nonyl, dodecyl, oleyl or benzyl, and
Y denotes hydroxyl or stands for phenolate or the anions of ethanoic, propionic, benzoic, maleic, 2-ethylhexanoic or oleic acid.

4. Preparations according to Claims 1 to 3, **characterised in that** they comprise from 0.05 to 1.5 wt.% catalyst, with reference to the total preparation.

5. Preparations according to Claims 1 to 3, **characterised in that** they comprise from 0.1 to 0.7 wt.% catalyst, with reference to the total preparation.

6. Preparations according to Claims 1 to 3, **characterised in that** they comprise from 0.2 to 0.5 wt.% catalyst, with reference to the total preparation.

7. Preparations according to Claims 1 to 6, **characterised in that** for the surface deactivation of the oligomeric solid polyisocyanates mono- and/or polyamines are used.

8. Preparations according to Claim 7, **characterised in that** for the surface deactivation of the oligomeric solid polyisocyanates mono- and/or polyamines are used which carry ionic groups as a molecular structure constituent.

9. Preparations according to Claim 8, **characterised in that** the polyamines which carry ionic groups as a molecular structure constituent are aminosulfonates corresponding to the formula
H₂N-A-NH-B-SO₃⁽⁻⁾Z⁽⁺⁾
wherein A and B, independently of one another, stand for hydrocarbon segments having 2 to 6 carbon atoms and Z stands for an alkali metal atom or tetraalkylammonium corresponding to the formula (NR¹R²R³R⁴)⁺ as defined in Claims 7 to 8.

10. Preparations according to Claim 9, **characterised in that** the amine sulfonate is a salt of 2-(2-aminoethylamino) ethanesulfonic acid.

11. Preparations according to Claim 9, **characterised in that** the amine sulfonate is a salt of taurine (2-aminoethanesulfonic acid).

12. Preparations according to Claims 1 to 11, **characterised in that** dimerisation products of TDI or IPDI are used as oligomeric solid polyisocyanates.

13. Preparations according to Claims 1 to 12, **characterised in that** polyurethanes are used as isocyanate-reactive polymers.

14. Preparations according to Claims 1 to 12, **characterised in that** polymers and copolymers of 2-chlorobutadiene are used as isocyanate-reactive polymers.

15. Process for the production of preparations according to Claims 1 to 14, **characterised in that** aqueous dispersions of at least one isocyanate-reactive polymer are mixed with at least one dispersed surface-deactivated oligomeric solid polyisocyanate and at least one catalyst which accelerates the reaction of the monomeric polyisocyanates which form by the thermal cleavage of the oligomeric polyisocyanates more strongly than the thermal cleavage itself.

16. Use of the preparations according to Claims 1 to 14 as binders as well as for bonded joints or the production of coatings.

17. Use according to Claim 16 for the production of a latently cross-linking adhesive layer.

18. Substrates coated with layers obtainable with preparations according to Claims 1 to 14.

## Revendications

1. Préparations aqueuses contenant
a) des polymères dispersés avec des groupes isocyanate-réactifs,
b) des matières solides-polyisocyanates oligomères dispersés désactivés en surface
c) ainsi qu'au moins un catalyseur et le catalyseur ou la totalité des catalyseurs accélère la réaction des polyisocyanates monomères produits par dissociation thermique des polyisocyanates oligomères plus fortement que la dissociation thermique elle-même,
**caractérisées en ce que** l'on utilise comme catalyseurs des composés de la formule X⁺Y⁻, dans lesquels indépendamment les uns des autres
X représente un alcali ou un tétraalkylammonium et
Y représente un groupe hydroxyle ou un groupe phénolate ou les anions d'acides carboxyliques saturés ou insaturés avec 1- 18 atomes de C.

2. Préparations selon la revendication 1, **caractérisées en ce qu'**indépendamment les uns des autres
X représente le lithium, le sodium ou le potassium ou un tétra- alkylammonium de la formule (NR¹R²R³R⁴)⁺, où R¹ à R⁴ repré- sentent indépendamment les uns des autres des restes alkyles saturés ou insaturés avec 1-18 atomes de C et
Y représente un groupe hydroxyle ou un groupe phénolate ou les anions d'acides carboxyliques saturés ou insaturés avec 1- 18 atomes de C.

3. Préparations selon la revendication 1, **caractérisées en ce que** indépendamment les uns des autres
X représente le lithium, le sodium ou le potassium ou un tétra- alkylammonium de la formule (NR¹R²R³R⁴)⁺, où R¹ à R⁴ représentent indépendamment les uns des autres un groupe méthyle, éthyle, 2-hydroxyéthyle, propyle, 2-hydroxypropyle, butyle, nonyle, dodécyle, oléyle ou benzyle et
Y représente un groupe hydroxyle ou un groupe phénolate ou les anions des acides acétique, propionique, benzoïque, maléique, 2-éthylhexanoïque ou oléique.

4. Préparations selon les revendications 1 à 3, **caractérisées en ce qu'**elles contiennent de 0,05 à 1,5 % en poids, rapportées à la préparation totale, de catalyseur.

5. Préparations selon les revendications 1 à 3, **caractérisées en ce qu'**elles contiennent de 0,1 à 0,7 % en poids, rapportées à la préparation totale, de catalyseur.

6. Préparations selon les revendications 1 à 3, **caractérisées en ce qu'**elles contiennent de 0,2 à 0,5 % en poids, rapportées à la préparation totale, de catalyseur.

7. Préparations selon les revendications 1 à 6, **caractérisées en ce que** l'on utilise, pour la désactivation de surface des matières solides-polyisocyanates oligomères, des mono- et/ou polyamines.

8. Préparations selon la revendication 7, **caractérisées en ce que** l'on utilise, pour la désactivation de surface des matières solides-polyisocyanates oligomères, des mono- et/ou polyamines, lesquelles portent des groupes ioniques comme constituants de la structure moléculaire.

9. Préparations selon la revendication 8, **caractérisées en ce qu'**il s'agit pour les polyamines portant les groupes ioniques comme constituants de la structure moléculaire d'aminosulfonates de la formule
H₂N-A-NH-B-SO₃⁽⁻⁾Z⁽⁺⁾
dans laquelle A et B représentent indépendamment l'un de l'autre des segments hydrocarbonés avec de 2 à 6 atomes de carbone et Z un atome de métal alcalin ou un tétraalkylammonium de la formule (NR¹R²R³R⁴)⁺ comme défini dans les revendications 7 à 8.

10. Préparations selon la revendication 9, **caractérisées en ce qu'**il s'agit pour l'aminosulfonate d'un sel de l'acide 2-(2-amino-éthylamino)-éthanesulfonique.

11. Préparations selon la revendication 9, **caractérisées en ce qu'**il s'agit pour l'aminosulfonate d'un sel de la taurine (acide 2-amino-éthanesulfonique).

12. Préparations selon les revendications 1 à 11, **caractérisées en ce que** l'on utilise comme matières solides-polyisocyanates oligomères des produits de dimérisation du TDI ou de l'IPDI.

13. Préparations selon les revendications 1 à 12, **caractérisées en ce que** l'on utilise comme polymères isocyanates-réactifs des polyuréthanes.

14. Préparations selon les revendications 1 à 12, **caractérisées en ce que** l'on utilise comme polymères isocyanates-réactifs des polymères ou des copolymères du 2-chlorobutadiène.

15. Procédé pour la préparation de préparations selon les revendications 1 à 14, **caractérisé en ce que** l'on mélange des dispersions aqueuses d'au moins un polymère isocyanate-réactif avec au moins un matériau solide-polyisocyanate oligomère dispersé désactivé en surface et au moins un catalyseur, lequel accélère la réaction des polyisocyanates monomères produits par dissociation thermique des polyisocyanates oligomères plus fortement que la dissociation thermique elle-même.

16. Utilisation des préparations selon les revendications 1 à 14 comme liant ainsi que pour des composés adhésifs ou la préparation de revêtements.

17. Utilisation selon la revendication 16 pour la préparation d'une couche adhésive se réticulant de manière latente.

18. Substrats revêtus de couches obtenues à partir de préparations selon les revendications 1 à 14.
